# EUROPÄISCHE PATENTSCHRIFT

(11) **EP 4 250 462 B1**
(45) Veröffentlichungstag und Bekanntmachung des Hinweises auf die Patenterteilung: **19.03.2025**
(21) Anmeldenummer: 22163689.7
(22) Anmeldetag: 22.03.2022
(51) Int. Cl.: H01M 50/502

(54) **BATTERIEMODUL MIT EINER SCHMELZSICHERUNG**
BATTERY MODULE WITH FUSE ELEMENT
MODULE DE BATTERIE DOTÉ D'UN FUSIBLE

(43) Veröffentlichungstag der Anmeldung: 27.09.2023
(73) Patentinhaber: VARTA Microbattery GmbH, 73479 Ellwangen Jagst (DE)
(72) Erfinder: Kloos, Dieter, 74579 Fichtenau (DE); Stübler, Roman, 73466 Lauchheim (DE)
(74) Vertreter: Ostertag & Partner Patentanwälte mbB

(56) Entgegenhaltungen:
- DE-A1- 102010 055 918
- DE-A1- 102017 004 915

## Beschreibung

Die vorliegende Erfindung betrifft ein Batteriemodul, das ein Gehäuse, mindestens einen Anschlusspol und innerhalb des Gehäuses eine Mehrzahl von elektrochemischen Energiespeicherzellen umfasst. Weiterhin weist das Batteriemodul mindestens eine Schmelzsicherung auf.

### ANWENDUNGSGEBIET UND STAND DER TECHNIK

Bei Batteriemodulen handelt es sich um wiederaufladbare, elektrische Energiespeicher, die beispielsweise in stationären Energiespeichersystemen, aber auch in vielen anderen Bereichen verwendet werden. In einem Batteriemodul werden eine Vielzahl einzelner elektrochemischer Energiespeicherzellen zusammengeschaltet, um so die für verschiedene Anwendungen erforderlichen hohen Energiedichten bereitstellen zu können. Mehrere Batteriemodule können wiederherum zu einem größeren Batteriespeichersystem zusammengefasst werden.

Jede elektrochemische Energiespeicherzelle des Batteriemoduls umfasst mindestens eine positive und mindestens eine negative Elektrode, welche durch einen Separator voneinander getrennt sind. Allgemein findet in elektrochemischen Zellen eine elektrochemische, energieliefernde Reaktion statt, welche sich aus zwei elektrisch miteinander gekoppelten, aber räumlich voneinander getrennten Teilreaktionen zusammensetzt. Eine bei vergleichsweise niedrigerem Redoxpotential stattfindende Teilreaktion läuft an der negativen Elektrode ab, eine bei vergleichsweise höherem Redoxpotential an der positiven Elektrode. Bei der Entladung werden an der negativen Elektrode durch einen Oxidationsprozess Elektronen freigesetzt, resultierend in einem Elektronenstrom über einen äußeren Verbraucher zur positiven Elektrode, von der eine entsprechende Menge an Elektronen aufgenommen wird. An der positiven Elektrode findet also ein Reduktionsprozess statt. Zeitgleich kommt es zum Zwecke des Ladungsausgleichs zu einem, der Elektrodenreaktion entsprechendem lonenstrom innerhalb der elektrochemischen Zelle. Dieser lonenstrom durchquert den Separator und wird durch einen ionenleitenden Elektrolyten gewährleistet.

In sekundären (wieder aufladbaren) elektrochemischen Zellen ist diese Entladereaktion reversibel, es besteht also die Möglichkeit, die bei der Entladung erfolgte Umwandlung chemischer Energie in elektrische Energie umzukehren.

Eine in Batteriemodulen oftmals verwendete elektrochemische Energiespeicherzelle ist die Lithium-Ionen-Zelle. Diese umfasst Elektroden, die Lithium-Ionen reversibel aufnehmen und wieder abgeben können, sowie einen Lithiumionen enthaltenden Elektrolyten.

Bei elektrochemischen Zellen und insbesondere auch bei Lithium-Ionen-Zellen sind verschiedene Bauformen bekannt. Neben prismatischen Formen sind Knopfzellen und zylindrische Rundzellen weit verbreitet. Sowohl Knopfzellen als auch zylindrische Rundzellen haben eine kreisförmige Grundfläche. Dabei unterscheiden sich zylindrische Rundzellen von Knopfzellen darin, dass Knopfzellen eine Höhe aufweisen, die geringer als ihr Durchmesser ist. Zylindrische Rundzellen weisen hingegen eine Höhe auf, die größer als ihr Durchmesser ist. Neben prismatisch geformten Energiespeicherzellen werden vor allem solche zylindrischen Rundzellen für den Aufbau von Batteriemodulen verwendet.

Aus der DE 102010055918 A1 ist eine Sicherungseinrichtung für eine Hochvoltleitung bei einem Kraftfahrzeug bekannt. Die Sicherungseinrichtung umfasst ein Schmelzelement in Form einer Litze aus einer Vielzahl von Einzeldrähten. Die Hochvoltleitung verbindet die Hochvoltbatterie mit dem elektrischen Antriebsmotor des Kraftfahrzeugs. Die Sicherungseinrichtung samt dem Schmelzelement ist zwischen der Hochvoltbatterie und dem Antriebsmotor angeordnet.

Aus der DE 102017004915 A1 ist eine Überstromsicherung mit einer Litze aus Einzeldrähten bekannt, die als Schmelzsicherung ausgebildet sein kann.Innerhalb eines Batteriemoduls können die einzelnen Energiespeicherzellen mit Hilfe von Zellhaltern fixiert sein. Mehrere Energiespeicherzellen können dabei in Form von Batterieblöcken zusammengefasst und zusammengeschaltet sein. Beispielsweise zwei oder mehr derartiger Batterieblöcke können in einem Batteriemodul innerhalb eines Gehäuses zusammengefasst werden und damit eine Einheit bilden. Die Batteriemodule können dann wiederherum die Bausteine für ein Batteriesystem bilden.

Bei dem Betrieb von elektrochemischen Zellen und insbesondere bei dem Betrieb eines Batteriemoduls entsteht Wärme. Sowohl bei der Energieabgabe als auch beim Laden erwärmen sich die Zellen. Eine Überhitzung kann zu Beeinträchtigungen und Schädigungen der elektrochemischen Zellen führen. Zudem kann von einem überhitzten Batteriemodul und vor allem bei einem Kurzschluss eine erhebliche Brandgefahr entstehen. In der Regel ist daher ein Batteriemodul mit einer Sicherung, üblicherweise mit einer Schmelzsicherung ausgestattet, die im Gefahrenfall dafür sorgt, dass das Batteriemodul abgeschaltet wird. Nach dem Auslösen der Sicherung ist das Batteriemodul im Allgemeinen defekt und nicht mehr zu verwenden.

Solche Schmelzsicherungen dienen vor allem zur Absicherung gegen Überströme, die insbesondere bei Kurzschlüssen in Batteriemodulen mit höherer Leistung und/oder Kapazität auftreten können. Als Schmelzsicherungen werden herkömmlicherweise beispielsweise offene Blattsicherungen verwendet, die im Prinzip aus einem Stanzteil z.B. aus Kupferblech bestehen. Solche Sicherungen sind auf der einen Seite verhältnismäßig kostengünstig. Auf der anderen Seite sind solche Sicherungen jedoch mechanisch empfindlich und weisen nur ein beschränktes Trennvermögen auf. Zudem können beim Trennen bzw. Durchschmelzen glühende Metalltropfen entstehen, die eine Brandgefahr verursachen können.

Als Weiterentwicklung solcher offenen Blattsicherungen werden gehauste Blattsicherungen eingesetzt. Solche gehausten Blattsicherungen sind zwar mechanisch weniger empfindlich und geben üblicherweise keine glühenden Teile beim Schmelzen ab. Dennoch weisen auch sie nur ein beschränktes Trennvermögen auf und sind verhältnismäßig teuer.

Weit verbreitet sind sogenannte Keramikrohrsicherungen, die mechanisch robust sind und ein hohes Trennvermögen haben. Die Keramikrohrsicherungen sind beispielsweise mit Quarzsand gefüllt. Die beim Trennvorgang auftretenden Schmelzprodukte, insbesondere glühende Metalltropfen, können nicht austreten, werden schnell gelöscht und bleiben sicher innerhalb des Keramikrohrs eingeschlossen. Solche Keramikrohrsicherungen sind jedoch relativ teuer.

Alle diese bekannten Schmelzsicherungen sind mechanisch starr, was aus konstruktiver Sicht Probleme bereiten kann. Insbesondere bei den mechanisch sehr empfindlichen Blattsicherungen dürfen beim Anschrauben keinerlei Biegemomente auf den starren Schmelzleiter wirken, da der Schmelzleiter sonst beschädigt werden kann und unter Umständen seine Spezifikation nicht mehr einhält.

Des Weiteren können vor allem bei großvolumigen Batteriemodulen durch Wärmeausdehnung und Temperaturwechsel und damit verbundenen Volumenänderungen mechanische Spannungen auf die Schmelzsicherung im montierten Zustand wirken, was ebenfalls zu funktionalen Beeinträchtigungen der Schmelzsicherung führen kann. Hinzu kommen weitere mögliche mechanische Belastungen der montierten Schmelzsicherung innerhalb des Batteriemoduls, beispielsweise bei einem Transport oder bei der Installation eines Batteriemoduls. Bei der Handhabung von Batteriemodulen, die beispielsweise etwa 40 kg schwer sein können, kann es zu Rüttelbewegungen oder Ähnlichem kommen. Alle diese mechanischen Einflüsse können sich negativ auf die Integrität der Schmelzsicherung auswirken.

Eine geschädigte Schmelzsicherung kann unter Umständen bereits bei Strömen auslösen, die unterhalb des Nennstroms der Sicherung liegen. Dies würde zu einem verfrühten Abschalten und Ausfallen des Batteriemoduls führen.

Weiterhin können Probleme durch mechanische Toleranzen bei der Fertigung von Batteriemodulen auftreten. Solche Toleranzen erschweren den Einbau einer herkömmlichen starren Schmelzsicherung.

### AUFGABE UND LÖSUNG

Vor diesem Hintergrund stellt sich die Erfindung die Aufgabe, eine verbesserte Schmelzsicherung bereitzustellen, die insbesondere für den Einsatz als Kurzschlusssicherung in Batteriemodulen geeignet ist. Dabei soll ein Batteriemodul vorgeschlagen werden, das mit einer Schmelzsicherung ausgestattet ist, die in konstruktiv praktischer Weise in dem Batteriemodul verbaut werden kann und die zudem mechanisch unempfindlich ist, so dass keine Beschädigungen oder Beeinträchtigungen der Schmelzsicherung im üblichen Betrieb des Batteriemoduls und insbesondere auch nicht bei einem Transport und einer Montage des Batteriemoduls zu befürchten sind.

Diese Aufgabe wird durch ein Batteriemodul gelöst, wie es Gegenstand des Anspruchs 1 ist. Bevorzugte Ausgestaltungen des Batteriemoduls und insbesondere der Schmelzsicherung des Batteriemoduls ergeben sich aus den abhängigen Ansprüchen.

Das erfindungsgemäße Batteriemodul umfasst ein Gehäuse und mindestens ein Anschlusselement, insbesondere einen Anschlussstecker, zum Anschließen des Batteriemoduls. Innerhalb des Gehäuses ist eine Mehrzahl von elektrochemischen Energiespeicherzellen vorgesehen. Das erfindungsgemäße Batteriemodul umfasst weiterhin mindestens eine Schmelzsicherung, die insbesondere zur Kurzschlusssicherung des Batteriemoduls dient. Die Schmelzsicherung umfasst mindestens einen Schmelzleiter.

Kernpunkt der Erfindung ist, dass die Schmelzsicherung eine Drahtlitze umfasst. Drahtlitzen sind bekanntlich aus einer Mehrzahl von Einzeldrähten aufgebaut. Durch diese Maßnahme erlangt die Schmelzsicherung eine mechanische Flexibilität, die sie von herkömmlichen Schmelzsicherungen unterscheidet. Die mechanische Flexibilität der Schmelzsicherung bietet insbesondere in konstruktiver Hinsicht verschiedene Vorteile. Vor allem können mit einer solchen flexiblen Schmelzsicherung mechanische Toleranzen innerhalb des Batteriemoduls während der Montage ausgeglichen werden. Zudem kann die flexible Schmelzsicherung bei Längen- oder Volumenänderungen im Batteriemodul, die thermisch und/oder oder mechanisch verursacht sein können, nachgeben, ohne beschädigt zu werden.

Die Flexibilität der Schmelzsicherung ist mit einer Biegbarkeit und einer gewissen Elastizität verbunden, so dass es bei auftretenden Biegemomenten nicht zu Materialbeeinträchtigungen der Schmelzsicherung kommt. Vor allem erlaubt die Drahtlitze der Schmelzsicherung eine Biegbarkeit der Schmelzsicherung in mehr als zwei Richtungen, also nicht beispielsweise nur nach oben und unten, sondern auch nach rechts und links. Die Flexibilität der Schmelzsicherung ist dabei vorzugsweise so ausgebildet, dass eine Abweichung von der ursprünglichen Ausrichtung der Drahtlitze in mehr als zwei Richtungen um bis zu mindestens 45° Biegewinkel, vorzugsweise um bis zu mindestens 90° Biegewinkel, möglich ist, ohne eine Beschädigung oder eine Funktionsbeeinträchtigung bei der Schmelzsicherung auszulösen.

Insgesamt lassen sich durch die mechanische Flexibilität der Schmelzsicherung mechanische Spannungen und Toleranzen innerhalb des Batteriemoduls ausgleichen und überbrücken. Zudem können hierdurch thermische Spannungen ausgeglichen werden, da die Schmelzsicherung flexibel und nachgiebig ist.

In Abhängigkeit von den verschiedenen Ausgestaltungsmöglichkeiten der Schmelzsicherung des erfindungsgemäßen Batteriemoduls kann der Schmelzleiter der Schmelzsicherung von der Drahtlitze gebildet werden oder ein anderes Element der Schmelzsicherung wird von der Drahtlitze gebildet. Näheres zu diesen verschiedenen Ausführungsformen ergibt sich aus der nachfolgenden Beschreibung.

Zweckmäßigerweise ist die Schmelzsicherung des Batteriemoduls an die jeweiligen Anforderungen, die die Auslegung des Batteriemoduls mit sich bringen, angepasst. Insbesondere ist die Schmelzsicherung an die jeweiligen Stromverhältnisse und die gewünschten bzw. erforderlichen Abschaltspannungen angepasst. In dieser Hinsicht zeichnet sich die Schmelzsicherung in bevorzugten Ausgestaltungen des Batteriemoduls durch das folgende zusätzliche Merkmal aus:
a. Die Schmelzsicherung ist für einen Nennstrom (Bemessungsstrom) in einem Bereich zwischen 10 und 1000 Ampere, vorzugsweise zwischen 200 und 500 Ampere, ausgelegt.

Eine solche Schmelzsicherung ist insbesondere für eine Hochstromsicherung bei üblichen Batteriemodulen geeignet, bei denen bei einem Kurzschluss mit Strömen im Bereich von 500 bis 5.000 Ampere zu rechnen ist. Durch einen Nennstrom in einem Bereich zwischen 10 und 1000 Ampere und insbesondere zwischen 200 und 500 Ampere löst die Schmelzsicherung bei einem Kurzschluss zuverlässig aus, so dass das Batteriemodul unmittelbar ausgeschaltet wird.

Das Batteriemodul weist erfindungsgemäß das folgende Merkmal auf:
a. Die Schmelzsicherung umfasst zwei Anschlüsse zur Anbindung an Montagepunkte im Batteriemodul.

In bevorzugten Ausgestaltungen handelt es sich bei den zwei Anschlüssen um Kabelschuhe und/oder Steckverbinder und/oder Aderendhülsen.

Solche Anschlüsse sind für eine schnelle und einfache Montage sehr geeignet. Weiterhin kann die Schmelzsicherung jedoch auch beispielsweise durch Verschweißung oder Verlötung angeschlossen werden.

Als Montagepunkte im Batteriemodul kommen verschiedene Punkte im Batteriemodul in Frage. Als Montagepunkte können beispielsweise auch Stromschienen oder Leiterplatten dienen. Zur Kurzschlusssicherung des Batteriemoduls ist es dabei besonders vorteilhaft, wenn die Schmelzsicherung die Energiespeicherzellen insgesamt absichert, so dass sofort bei einem Überstrom das gesamte Batteriemodul abgeschaltet bzw. alle Zellen abgetrennt werden. In besonders bevorzugter Weise kann die Schmelzsicherung beispielsweise zwischen einer Sammelschiene bzw. Strom- oder Anschlussschiene, die alle Energiespeicherzellen zusammenfasst, und der Stromleitung, die zu einem Stecker bzw. dem Anschlusselement des Batteriemoduls führt, angeordnet sein.

Die Schmelzsicherung des erfindungsgemäßen Batteriemoduls kann insbesondere in zwei grundsätzlichen Ausführungsformen ausgebildet sein. In beiden Fällen bildet die Drahtlitze der Schmelzsicherung das flexible Element der Schmelzsicherung, das der Schmelzsicherung insgesamt eine mechanische Flexibilität verleiht, die vor allem im Zusammenhang mit einer Sicherung in Batteriemodulen viele Vorteile bietet.

In einer ersten grundsätzlichen Ausführungsform bildet die Drahtlitze selbst den Schmelzleiter der Schmelzsicherung. In einer zweiten grundsätzlichen Ausführungsform ist eine Drahtlitze als flexibles Element zusätzlich zu dem eigentlichen Schmelzleiter vorgesehen. Die Drahtlitze ist in dieser zweiten grundsätzlichen Ausführungsform in der Regel nicht selbst als Schmelzleiter ausgebildet, sie zeichnet sich dann vielmehr durch eine höhere Stromtragfähigkeit als der Schmelzleiter aus. Der Schmelzleiter kann in dieser zweiten grundsätzlichen Ausführungsform ebenfalls von einer Drahtlitze gebildet und damit ebenfalls mechanisch flexibel sein. Es kann jedoch auch ein starrer Schmelzleiter vorgesehen sein.

Die folgenden Ausführungen beziehen sich zunächst auf die erste grundsätzliche Ausführungsform, bei der die Drahtlitze selbst der Schmelzleiter ist.

In bevorzugter Weise ist es insbesondere in dieser Ausführungsform vorgesehen, dass die Drahtlitze sich durch mindestens eines der folgenden zusätzlichen Merkmale auszeichnet:
a. Die Einzeldrähte der Drahtlitze sind aus einem metallischen Werkstoff gebildet.
b. Der metallische Werkstoff umfasst Silber und/oder Zinn und/oder Kupfer.

Beispielsweise kann in dieser Ausführungsform die Drahtlitze aus einer Mehrzahl von dünnen, an sich bekannten Schmelzleiterdrähten hergestellt sein. Die Einzeldrähte können beispielsweise zu einem geflochtenen Flachleiter oder zu einer gedrehten Litze mit einem runden Querschnitt verarbeitet sein.

Besonders Silber eignet sich für die Verwendung in solchen Schmelzdrähten. Kombinationen mit Zinn, beispielsweise in Form von Zinnaufträgen auf Silberdrähten, sind im Zusammenhang mit den Schmelzeigenschaften besonders vorteilhaft. Alternativ kann beispielsweise versilbertes Kupfer als Material für die Schmelzsicherung verwendet werden.

Durch die Wahl der Dimensionen und des Materials für die Drahtlitze lässt sich die Schmelzsicherung an verschiedene Anforderungen und Gegebenheiten anpassen. Beispielsweise kann durch die Länge der Drahtlitze eine Anpassung an verschiedene Abschaltspannungen vorgenommen werden. Durch eine Anpassung der Dicke der gesamten Drahtlitze, beispielsweise durch Anpassung der Anzahl oder des Durchmessers der Einzeldrähte, lässt sich die Schmelzsicherung an die jeweiligen Stromverhältnisse anpassen.

In einer besonders bevorzugten Ausgestaltung zeichnet sich das Batteriemodul durch das folgende zusätzliche Merkmal aus:
a. Der Schmelzleiter weist eine Länge von mindestens 2 cm auf.

Eine Länge von mindestens 2 cm eignet sich insbesondere für Batteriemodule im Hochstrombereich, bei denen das Auslösen der Schmelzsicherung in einem Bereich von beispielsweise 300 Ampere liegen soll. Die Dicke bzw. die Querschnittsfläche des Schmelzleiters bzw. der Drahtlitze in dieser Ausgestaltung kann beispielsweise in einem Bereich von 0,4 bis 10 mm² liegen. Der Schmelzleiter kann dabei beispielsweise einen etwa runden Querschnitt oder einen profilierten Querschnitt aufweisen.

Eine Mindestlänge von 2 cm ist besonders vorteilhaft, da bei einem Durchbrennen des Schmelzleiters, also bei einem Auslösen der Schmelzsicherung, die beiden verbleibenden Enden des Schmelzleiters durch die Schwerkraft nach unten fallen und sich somit die Trennstelle zwischen den aufgeschmolzenen Schmelzleiterenden vergrößert. Dies ist vorteilhaft, da der durch das Durchbrennen gegebenenfalls entstehende Lichtbogen hierdurch leichter gelöscht wird. Durch einen entstehenden Lichtbogen fließt Strom und erzeugt eine Wärme von über 2.000 °C und stellt damit eine erhebliche Brandgefahr dar. Ein schnelles Löschen des Lichtbogens ist daher vorteilhaft und wichtig. Umso größer die Länge des Schmelzleiters ist, umso niedriger ist die Gefahr eines persistierenden Lichtbogens. Daher kann es weiter bevorzugt sein, dass die Länge des Schmelzleiters 3 cm oder mehr beträgt.

In einer einfachen Ausgestaltung einer solchen Schmelzsicherung ist eine Drahtlitze, die den Schmelzleiter bildet und die eine entsprechende Länge, beispielsweise 2 oder 3 cm, aufweist, an beiden Seiten mit einem Anschluss für die Montage innerhalb des Batteriemoduls ausgestattet. Beispielsweise kann sich an beiden Enden der Drahtlitze ein Kabelschuh befinden. In dieser einfachen Ausgestaltung der Schmelzsicherung wird die Schmelzsicherung also von einer als Schmelzleiter ausgebildeten Drahtlitze mit zwei daran befestigten Kabelschuhen oder gegebenenfalls anderen Anschlusselementen gebildet.

In einer bevorzugten Weiterbildung dieser Ausgestaltung der Schmelzsicherung ist mindestens eines der folgenden zusätzlichen Merkmale vorgesehen:
a. Die Drahtlitze ist von einem elektrischen Isolierungsmaterial umgeben, das mechanisch flexibel ist;
b. das elektrische Isolierungsmaterial ist von einem keramischen Material, insbesondere von Keramikperlen, gebildet.

Vorzugsweise sind die vorgenannten Merkmale a. und b. in Kombination miteinander realisiert.

Die Flexibilität des Isolierungsmaterials gewährleistet insgesamt die mechanische Flexibilität der Schmelzsicherung.

Die Ausführung des Isolierungsmaterials durch eine Mehrzahl von Keramikperlen stellt eine besonders einfach zu realisierende und dabei sehr vorteilhafte Ausgestaltung dar. Im intakten Zustand der Schmelzsicherung umhüllen die Keramikperlen die Drahtlitze, die den Schmelzleiter bildet. Bei einem auslösenden Überstrom brennt der Schmelzleiter bzw. die Drahtlitze durch. Die voneinander getrennten Enden der Drahtlitze fallen durch das Gewicht der Keramikperlen nach unten bzw. werden nach unten gezogen. Hierdurch vergrößert sich sehr schnell der Abstand zwischen den Enden der Drahtlitze, so dass sich die Lichtbogenstrecke bzw. die Lichtbogenzone schnell vergrößert und ein gegebenenfalls aufgetretener Lichtbogen erlischt.

Keramikperlen haben gegenüber anderen flexiblen elektrischen Isolierungsmaterialien, wie beispielsweise Glasfasergewebe, neben der Aufrechterhaltung der mechanischen Flexibilität der Schmelzsicherung also den Vorteil, dass die Keramikperlen die Löschung des Lichtbogens durch die schnelle Trennung der Schmelzenden voneinander fördern und nicht, wie beispielsweise ein Glasfasergewebe, das Trennen der Enden innerhalb der Schmelzzone behindern würden.

Für diese Ausgestaltung geeignete Keramikperlen sind im Allgemeinen preisgünstig verfügbar und bestehen beispielsweise aus Steatit. Geeignete Keramikperlen sollten dabei eine thermische Beständigkeit beispielsweise bis 1.000 °C oder bis 1.200 °C aufweisen.

In einer weiteren, besonders bevorzugten Weiterbildung dieser ersten grundsätzlichen Ausführungsform der Schmelzsicherung, bei der die Drahtlitze den Schmelzleiter bildet, ist mindestens eines der folgenden zusätzlichen Merkmale vorgesehen:
a. Das Batteriemodul oder die Schmelzsicherung umfasst mindestens ein Mittel zum Auseinanderziehen von Teilen der Drahtlitze nach deren Durchschmelzen;
b. das wenigstens eine Mittel zum Auseinanderziehen von Teilen der Drahtlitze ist eine oder sind mehrere Federelemente;
c. die Federelemente sind Spiralfedern.

Vorzugsweise sind die vorgenannten Merkmale a. und b. und insbesondere die vorgenannten Merkmale a., b. und c. in Kombination miteinander verwirklicht.

Durch diese Maßnahmen wird das Auseinanderziehen der aufgeschmolzenen Enden des Schmelzleiters weiter unterstützt, so dass es zu einer schnellen Löschung des gegebenenfalls auftretenden Lichtbogens kommt.

In einer bevorzugten Ausgestaltung dieses Aspekts der Erfindung ist mindestens eines der folgenden zusätzlichen Merkmale vorgesehen:
a. Das mindestens eine Mittel zum Auseinanderziehen von Teilen der Drahtlitze wirkt in Längsrichtung der Drahtlitze;
b. das Mittel zum Auseinanderziehen von Teilen der Drahtlitze ist eine Spiralfeder, die sich in Längsrichtung der Drahtlitze erstreckt und die an mindestens einem Punkt, vorzugsweise an zwei oder mehr Punkten, mechanisch mit der Drahtlitze verbunden ist.

Vorzugsweise sind die vorgenannten Merkmale a. und b. in Kombination miteinander verwirklicht.

In besonders bevorzugter Weise erstreckt sich die Spiralfeder über die gesamte Länge der Drahtlitze, die den Schmelzleiter bildet. Bei der Montage der Schmelzsicherung im Batteriemodul wird die Spiralfeder, die vorzugsweise an mehreren Punkten, beispielsweise an zwei oder mehr Punkten, mit der Drahtlitze verbunden ist, auseinandergezogen, so dass die Schmelzsicherung im montierten Zustand unter Spannung steht. Bei einem auftretenden Überstrom, also bei Auslösung der Schmelzsicherung, schmilzt zunächst der Schmelzleiter durch. Der Strom fließt dann durch die Spiralfeder, bei der es sich beispielsweise um eine Stahlfeder handelt, und die Spiralfeder schmilzt ebenfalls schnell durch. Beide Enden des durchgeschmolzenen Schmelzleiters werden von den verbleibenden beiden Teilen der Spiralfeder auseinandergezogen und schnell voneinander entfernt. Auch dies führt zu einer sehr schnellen Löschung eines gegebenenfalls auftretenden Lichtbogens.

Die mechanische Anbindung der Spiralfeder an den Schmelzleiter bzw. die Drahtlitze kann beispielsweise so ausgebildet sein, dass jede Federwindung der Spiralfeder durch die Drahtlitze hindurchtritt.

In einer anderen Ausbildung dieses Aspekts der Erfindung mit Mitteln zum Auseinanderziehen von Teilen der Drahtlitze nach deren Durchschmelzen ist mindestens eines der folgenden zusätzlichen Merkmale vorgesehen:
a. Das mindestens eine Mittel zum Auseinanderziehen von Teilen der Drahtlitze wirkt senkrecht in Bezug zur Längserstreckung der Drahtlitze;
b. das mindestens eine Mittel zum Auseinanderziehen von Teilen der Drahtlitze ist mindestens ein Federelement, vorzugsweise sind es zwei Federelemente;
c. das mindestens eine Mittel zum Auseinanderziehen von Teilen der Drahtlitze wird von zwei Federelementen realisiert, die an verschiedenen Abschnitten der Drahtlitze angreifen.

In dieser Ausgestaltung der Schmelzsicherung kann beispielsweise ein einzelnes Federelement senkrecht in Bezug zur Längserstreckung der Drahtlitze an der Drahtlitze angreifen und diese unter Zug setzen. Dieses Mittel zum Auseinanderziehen kann beispielsweise eine Spiralfeder oder eine Blattfeder oder eine federnde Gehäusestrukturkomponente sein. Auch in dieser Ausgestaltung wird die Lichtbogenzone durch die Kraft des Federelements oder eines anderen vergleichbaren Mittels auseinandergezogen oder, je nach Ausgestaltung, auseinandergedrückt, so dass es zu einem schnellen Löschen eines gegebenenfalls auftretenden Lichtbogens kommt.

In anderen Ausgestaltungen können beispielsweise zwei Mittel zum Auseinanderziehen vorgesehen sein, zum Beispiel zwei Spiralfedern oder andere Federelemente, die im eingebauten Zustand mit mechanischer Kraft auf den Schmelzleiter wirken. Zweckmäßigerweise wirken diese zwei Mittel in unterschiedliche Richtungen, so dass bei einem Schmelzen der Drahtlitze die verbleibenden Enden der Drahtlitze in unterschiedliche Richtungen gezogen werden, so dass ein gegebenenfalls entstehender Lichtbogen zuverlässig sehr schnell gelöscht wird.

Diese Ausgestaltungen der Schmelzsicherung mit Federelementen oder anderen Mitteln zum Auseinanderziehen von Teilen der Drahtlitze, die senkrecht in Bezug zur Längserstreckung der Drahtlitze wirken, können mit besonderem Vorteil zusätzlich mit mechanisch flexiblen Isolierungsmaterialien, wie beispielsweise Keramikperlen, ausgestattet sein. Die flexiblen Isolierungsmaterialien bewirken zum einen eine elektrische Isolierung des Schmelzleiters. Zum anderen unterstützen die Isolierungsmaterialen, insbesondere die Keramikperlen, das schnelle Auseinanderziehen der durchgeschmolzenen Schmelzleiterenden.

In der bereits erwähnten zweiten grundsätzlichen Ausführungsform der Schmelzsicherung bildet die Drahtlitze nicht den Schmelzleiter, sondern ein zusätzliches, flexibles Element der Schmelzsicherung, die neben dem eigentlichen Schmelzleiter vorgesehen ist. Die Drahtlitze ist in dieser Ausführungsform stromtragfähiger als der Schmelzleiter, sodass die Drahtlitze in der Regel in dieser Ausführungsform im Belastungsfall nicht schmilzt. Der Schmelzleiter selbst kann starr oder flexibel sein und beispielsweise ebenfalls von einer Drahtlitze gebildet sein, die dann aber aus Schmelzleiterdrähten gefertigt ist.

Bei dieser Ausführungsform der Schmelzsicherung ist mindestens eines der folgenden Merkmale vorgesehen:
a. Die Schmelzsicherung umfasst zusätzlich zu dem Schmelzleiter einen mechanisch flexiblen elektrischen Leitungsabschnitt, der von der Drahtlitze gebildet wird;
b. Der mechanisch flexible Leitungsabschnitt, der von der Drahtlitze gebildet wird, steht im montierten Zustand unter Vorspannung, insbesondere unter Federspannung;
c. die Vorspannung, insbesondere die Federspannung, wirkt in Längsrichtung des mechanisch flexiblen elektrischen Leitungsabschnitt und bewirkt eine Kontraktion des mechanisch flexiblen elektrischen Leitungsabschnitts bei einem Durchschmelzen des Schmelzleiters.

In besonders bevorzugten Ausgestaltungen dieser Ausführungsform der Schmelzsicherung sind die vorgenannten Merkmale a. und b. und, besonders bevorzugt, die vorgenannten Merkmale a. und b. und c. in Kombination miteinander verwirklicht.

Im einfachsten Fall umfasst die Schmelzsicherung in dieser Ausgestaltung einen Schmelzleiter, der starr oder flexibel sein kann, und einen flexiblen Leitungsabschnitt, der von einer Drahtlitze, beispielsweise einer Kupferlitze, gebildet wird. Beide Abschnitte sind in Reihe geschaltet, beispielsweise mittels eines Stoßverbinders oder durch Schweißung, so dass beide Leitungsabschnitte elektrisch und mechanisch miteinander verbunden sind. Zusammen bilden sie die Schmelzsicherung, die über entsprechende Anschlüsse, beispielsweise mittels zwei Kabelschuhen, an den entsprechenden Montagepunkten im Batteriemodul angebracht werden kann. Der flexible Leitungsabschnitt, also die Drahtlitze, ist dabei stromtragfähiger als der Schmelzleiter.

Bei dem Schmelzleiter kann es sich um ein starres Schmelzelement, wie beispielsweise ein Kupferstanzteil, handeln. In anderen Ausgestaltungen kann es sich bei dem Schmelzleiter ebenfalls um eine Drahtlitze handeln, die dann aber die entsprechenden Schmelzeigenschaften aufweist.

Gemäß dem vorgenannten bevorzugten Merkmal b. steht der mechanisch flexible Leitungsabschnitt im montierten Zustand unter Vorspannung. Hierfür kann insbesondere ein Federelement, beispielsweise eine Spiralfeder, den Bereich des mechanisch flexiblen Leitungsabschnitts überspannen und diesen unter Spannung stellen.

Bei einem Überstrom, der zum Auslösen der Schmelzsicherung führt, schmilzt der Schmelzleiter, wohingegen der flexible Leitungsabschnitt intakt bleibt. Durch die Vorspannung wird jedoch der flexible Leitungsabschnitt zusammengezogen bzw. kontrahiert, so dass die Lichtbogenzone im Bereich der aufgeschmolzenen Enden des Schmelzleiters sehr effektiv auseinandergezogen wird und es zu einem Löschen eines gegebenenfalls auftretenden Lichtbogens kommt.

In bevorzugten Weiterbildungen der verschiedenen Ausgestaltungen der Schmelzsicherung kann die Schmelzsicherung mit einem Tropfen Lot versehen werden und so als Ganzbereichs-Sicherung dienen. Durch den Zusatz von Lot kann die Charakteristik der Sicherung in einer beabsichtigten Weise verändert und/oder angepasst werden. Diese Anpassung kann sich dabei auf die gesamte Sicherung oder auch nur auf einen Teilbereich beziehen. Wird zum Beispiel ein Schmelzleiter aus Kupfer mit etwas Zinn versehen, so legiert das Zinn zunächst oberflächlich mit dem Kupfer zu Bronze. Bronze ist deutlich hochohmiger als Kupfer, wodurch der Widerstand des Schmelzleiters steigt. Dies erhöht die Wärmeleistung an dieser Stelle, sodass der Schmelzleiter noch heißer wird und damit den weiteren Legierungsprozess beschleunigt. Dies lässt sich auch als ein gewollter "thermal runaway" bezeichnen. Der Vorteil hiervon ist, dass es damit keinen Strombereich gibt, in dem der Schmelzleiter dauerhaft extrem heiß bleibt und beispielsweise glüht. Die Einstellbarkeit der Charakteristik bietet in dieser Ausführungsform also besondere Vorteile, auch wenn die Schmelzsicherung in dieser Ausführungsform unter Belastung möglicherweise schneller altert.

Die Erfindung umfasst weiterhin ein Batteriespeichersystem, das mindestens ein Batteriemodul gemäß der obigen Beschreibung mit einer mechanisch flexiblen Schmelzsicherung umfasst. Vorzugsweise sind alle Batteriemodule des Batteriespeichersystems mit einer solchen flexiblen Schmelzsicherung ausgestattet. Bezüglich weiterer Merkmale der Schmelzsicherungen der Batteriemodule des Batteriespeichersystems wird auf die obige Beschreibung verwiesen.

Schließlich umfasst die Erfindung eine Schmelzsicherung, wie sie sich aus der obigen Beschreibung ergibt. Eine solche Schmelzsicherung ist insbesondere für die Kurzschlusssicherung eines Batteriemoduls geeignet, kann im Prinzip aber auch für andere Anwendungen eingesetzt werden. Bezüglich weiterer Merkmale dieser Schmelzsicherung wird auf die obige Beschreibung verwiesen.

Weitere Merkmale und Vorteile der Erfindung ergeben sich aus der nachfolgenden Beschreibung von bevorzugten Ausführungsbeispielen in Verbindung mit den Zeichnungen. Hierbei können die einzelnen Merkmale jeweils für sich oder in Kombination miteinander verwirklicht sein.

### KURZBESCHREIBUNG DER ZEICHNUNGEN

In den Figuren zeigen:
- Fig. 1: schematische Darstellung eines erfindungsgemäßen Batteriemoduls mit Schmelzsicherung;
- Fig. 2: Darstellung einer Schmelzsicherung in einer ersten Ausgestaltung mit Illustrierung der Stadien beim Auslösen der Sicherung (Teilfiguren A bis C);
- Fig. 3: Darstellung einer Schmelzsicherung in einer weiteren Ausgestaltung mit Illustrierung der Stadien beim Auslösen der Sicherung (Teilfiguren A bis D);
- Fig. 4: Darstellung einer Schmelzsicherung in einer weiteren Ausgestaltung mit Illustrierung der Stadien bei der Auslösung der Sicherung (Teilfiguren A bis D);
- Fig. 5: Darstellung einer Schmelzsicherung in einer weiteren Ausgestaltung;
- Fig. 6: Darstellung einer Schmelzsicherung in einer weiteren Ausgestaltung mit Illustrierung der Stadien beim Auslösen der Sicherung (Teilfiguren A bis C); und
- Fig. 7: Darstellung einer Schmelzsicherung in einer weiteren Ausgestaltung mit Darstellung der Stadien beim Auslösen der Sicherung (Teilfiguren A bis D).

### DETAILLIERTE BESCHREIBUNG DER AUSFÜHRUNGSBEISPIELE

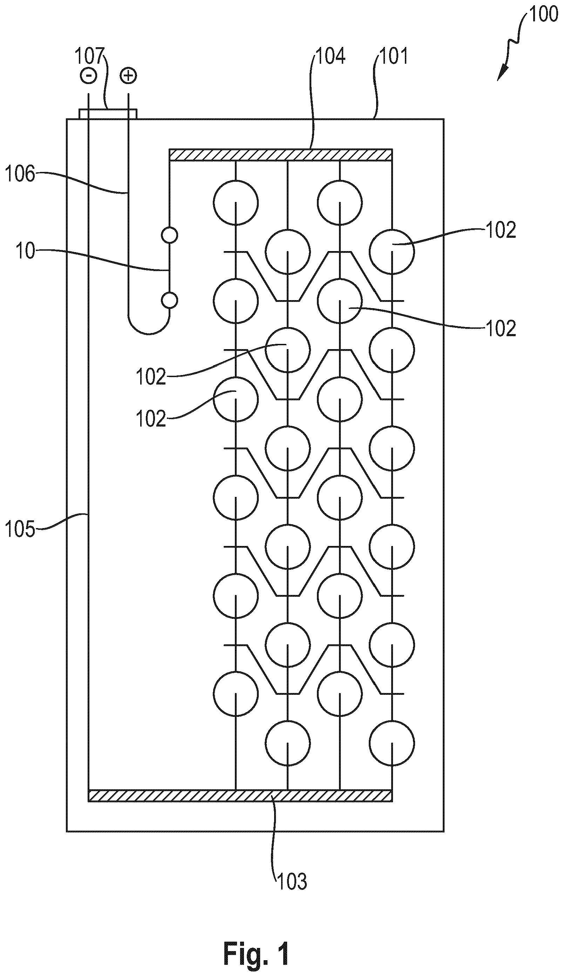

**Fig. 1** illustriert in schematischer Weise ein erfindungsgemäßes Batteriemodul 100 mit einem Gehäuse 101, wobei innerhalb des Gehäuses 101 eine Mehrzahl von zylindrischen Rundzellen als Energiespeicherzellen 102 vorgesehen sind. Die Darstellung zeigt eine Aufsicht auf die Stirnseiten der Energiespeicherzellen 102, die beispielsweise mittels eines Zellhalters (nicht dargestellt) in Form eines Batterieblocks zusammengefasst sind. Die Energiespeicherzellen 102 können dabei, je nach Anwendung, parallel und/oder seriell miteinander verschaltet sein. Das negative Potential und das positive Potential der miteinander verschalteten Energiespeicherzellen 102 sind an eine negative Stromschiene 103 bzw. eine positive Stromschiene 104 angeschlossen. Die Stromschienen 103 und 104 sind jeweils über eine Stromleitung 105 und 106 mit einem Anschlussstecker 107, der den Gehäuseaußenkontakt bildet, verbunden. Zur Kurzschlusssicherung ist zwischen der einen, in diesem Fall der positiven Anschlussschiene 104 und der zum Anschlussstecker 107 weiterführenden Stromleitung 106 eine Schmelzsicherung 10 eingefügt. Das Bezugszeichen 10 steht hier stellvertretend für eine erfindungsgemäße Schmelzsicherung, die beispielsweise auch gemäß den nachfolgend erläuternden Ausführungsformen 20, 30, 40, 50 oder 60 ausgebildet sein kann. Die Schmelzsicherung 10 umfasst erfindungsgemäß eine Drahtlitze und ist mechanisch flexibel. Durch diese mechanische Flexibilität kann die Schmelzsicherung 10 mechanische Toleranzen ausgleichen. Weiterhin kann sie bei Längen- oder Volumenänderungen von Elementen des Batteriemoduls 100, die thermisch oder mechanisch bedingt sein können, nachgeben, ohne dabei beschädigt zu werden.

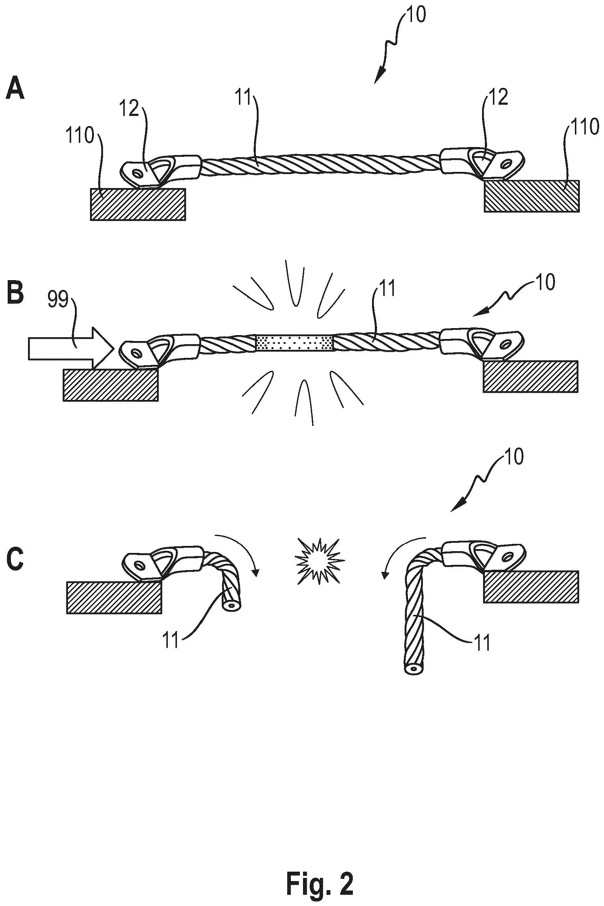

**Fig. 2** illustriert eine erste mögliche Ausgestaltung der Schmelzsicherung 10, bei der die Drahtlitze 11 den Schmelzleiter bildet. Hierbei kann die Drahtlitze aus üblichen dünnen Schmelzleiterdrähten hergestellt sein. Die einzelnen Schmelzleiterdrähte können beispielsweise verwunden oder verflochten sein. Auf diese Weise wird eine flexible Drahtlitze hergestellt, die ein definiertes Schmelzverhalten aufweist und die als Sicherung für einen Überstrom oder einen Kurzschluss verwendet werden kann.

In diesem Ausführungsbeispiel sind die Enden des Schmelzleiters 11 bzw. der Drahtlitze mit Kabelschuhen 12 versehen. Mittels der Kabelschuhe 12 kann die Schmelzsicherung mechanisch und elektrisch an Montagepunkte 110 des hier nicht dargestellten Batteriemoduls angeschlossen werden. Es sind auch andere Verbindungstechniken denkbar, beispielsweise Flachstecker oder eine direkte Verschweißung der Enden. Auch eine Kompaktierung der Enden der Drahtlitze 11 mit oder ohne Durchbohrung zum Anschrauben ist möglich.

Teilfigur 2A zeigt den montierten Zustand der Schmelzsicherung 10 an Montagepunkten 110 im Batteriemodul. Auf diese Weise können mit der Schmelzsicherung beispielsweise auf der einen Seite ein Anschlussstecker des Batteriemoduls und auf der anderen Seite die miteinander verschalteten Energiespeicherzellen überbrückt sein.

Teilfigur 2B deutet das Auftreten eines Überstroms 99 an, der zu einem Auslösen der Schmelzsicherung 10 führt. Der Schmelzleiter 11 erhitzt sich durch den Überstrom und schmilzt durch, wie es in Teilfigur 2C gezeigt ist. Die Enden des flexiblen Schmelzleiters 11 fallen der Schwerkraft gehorchend nach unten. Dadurch wird die Länge eines gegebenenfalls entstandenen Lichtbogens vergrößert, so dass der Lichtbogen schnell erlischt.

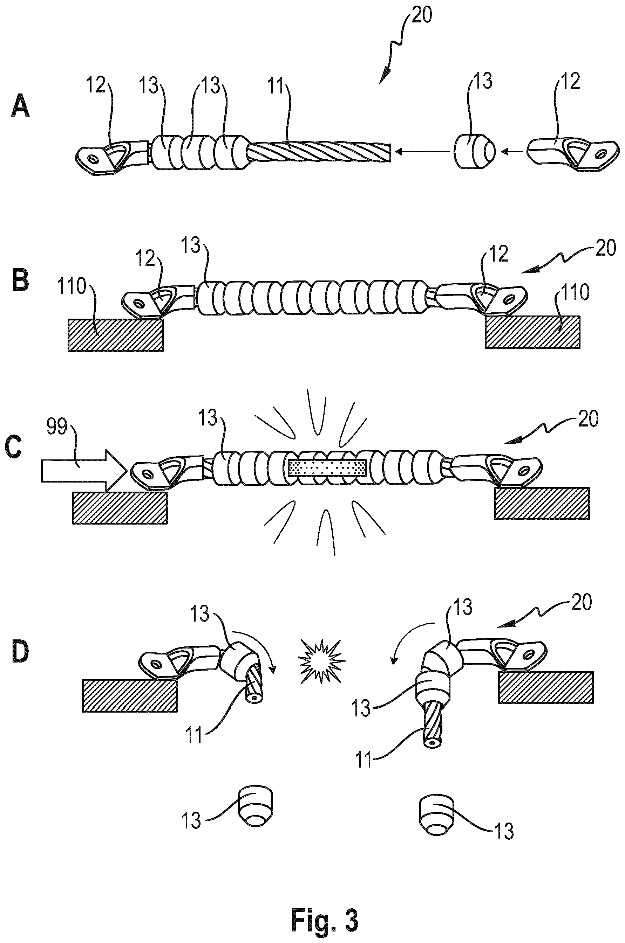

**Fig.** 3 zeigt eine weitere Ausgestaltung einer Schmelzsicherung 20. Vergleichbar mit der Ausgestaltung aus Fig. 2 wird die Schmelzsicherung 20 von einer flexiblen Drahtlitze als Schmelzleiter 11 gebildet, wobei an den Enden des Schmelzleiters 11 Kabelschuhe 12 angebracht sind. Auf den Schmelzleiter 11 sind mehrere Keramikperlen 13 aufgezogen, wie es in Teilfigur 3A angedeutet ist. Teilfigur 3B zeigt den montierten Zustand der Schmelzsicherung 20, bei dem die Kabelschuhe 12 an festen Montagepunkten 110 des Batteriemoduls befestigt sind.

Teilfigur 3C deutet das Auftreten eines Überstroms 99 an, der zum Auslösen der Schmelzsicherung 20 führt. Durch den Überstrom 99 erhitzt sich der Schmelzleiter 11 und schmilzt durch. Wie in Teilfigur 3D gezeigt, fallen die durchtrennten Enden des Schmelzleiters 11 nach unten, wobei dies durch die herabfallenden Keramikperlen 13 weiter unterstützt wird. Die Lichtbogenzone zwischen den Enden des aufgeschmolzenen Schmelzleiters 11 vergrößert sich dabei schnell und ein gegebenenfalls entstandener Lichtbogen erlischt.

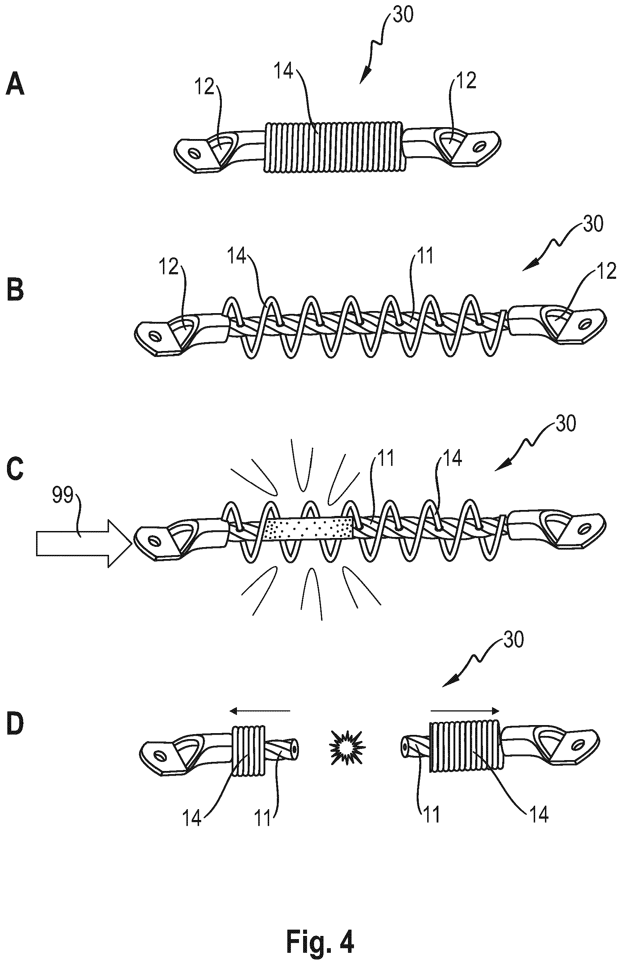

**Fig.** 4 illustriert eine weitere Ausgestaltung einer Schmelzsicherung 30. Auch hier umfasst die Schmelzsicherung 30 eine flexible Drahtlitze als Schmelzleiter 11, an dessen beiden Enden Kabelschuhe 12 zur Befestigung der Schmelzsicherung an hier nicht gezeigten Montagepunkten eines Batteriemoduls angebracht sind. Darüber hinaus zeichnet sich diese Ausgestaltung durch eine Spiralfeder 14 aus, die in Längsrichtung des Schmelzleiters 11 angeordnet ist und sich über die gesamte Länge des Schmelzleiters 11 erstreckt. Dabei ist die Spiralfeder 14 an mehreren Punkten fest mit dem Schmelzleiter 11 verbunden, indem die Spiralfeder 14 in dieser Ausgestaltung bei jeder Federwindung durch den Schmelzleiter 11 hindurchtritt.

Teilfigur 4A zeigt den Ausgangszustand der Schmelzsicherung 30 im nicht montierten Zustand. Teilfigur 4B zeigt den montierten Zustand der Schmelzsicherung 30, bei der die Kabelschuhe 12 an hier nicht gezeigten Montagepunkten des Batteriemoduls befestigt sind und die Spiralfeder 14 durch ein Auseinanderziehen der Schmelzsicherung 30 bei deren Montage unter mechanische Spannung gesetzt ist.

Teilfigur 4C illustriert das Auftreten eines Überstroms 99, der zum Auslösen der Schmelzsicherung 30 führt. Der Schmelzleiter 11 erhitzt sich und schmilzt durch. Der Schmelzleiter 11 ist niederohmiger als die Spiralfeder 14, bei der es sich beispielsweise um eine Stahlfeder handelt. Der Strom fließt folglich im Wesentlichen durch den Schmelzleiter 11, so dass der Schmelzleiter 11 zuerst durchschmilzt. Anschließend fließt der Strom auch durch die Spiralfeder 14, so dass auch die Spiralfeder 14 durchschmilzt, da sie nur wenig Strom tragen kann. Wie in Teilfigur 4D illustriert ist, ziehen die getrennten Teile der Spiralfeder 14 nach dem Durchschmelzen die abgeschmolzenen Enden des Schmelzleiters 11 sehr schnell auseinander und sorgen somit für ein Erlöschen eines gegebenenfalls aufgetretenen Lichtbogens.

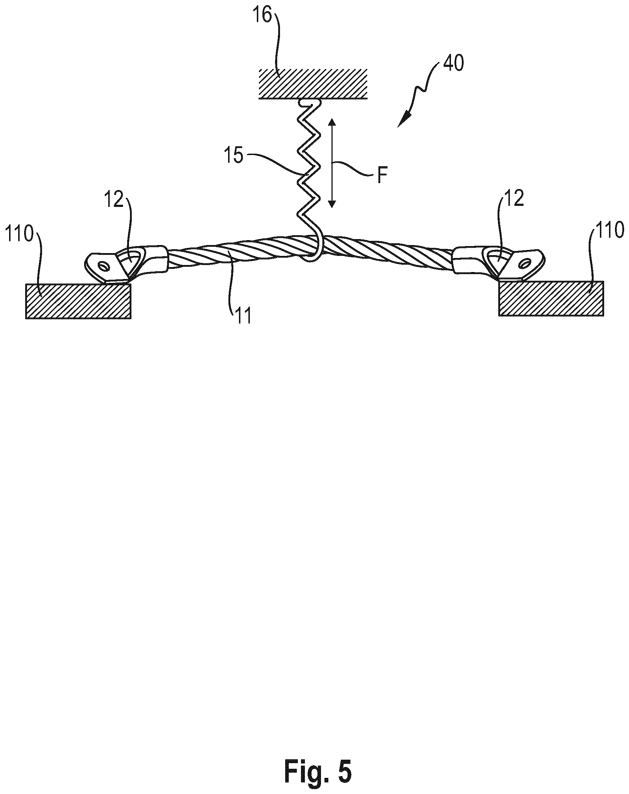

**Fig. 5** illustriert eine weitere Ausgestaltung einer Schmelzsicherung 40 mit einer Drahtlitze als Schmelzleiter 11. An den Enden des Schmelzleiters 11 sind Kabelschuhe 12 oder gegebenenfalls andere Anbindungselemente zur Befestigung der Schmelzsicherung 40 an festen Montagepunkten 110 des Batteriemoduls vorgesehen. Ein Federelement 15 ist an einem externen Aufhängepunkt 16 im Batteriemodul auf der einen Seite fixiert. Auf der anderen Seite greift das Federelemente 15 senkrecht in Bezug zur Längserstreckung des Schmelzleiters 11 am Schmelzleiter 11 im montierten Zustand an und setzt den Schmelzleiter unter Zug. Anstatt der hier gezeigten Spiralfeder 15 können auch andere federnde Elemente verwendet werden, beispielsweise eine Blattfeder oder federnde Gehäusestrukturkomponenten. Schmilzt der Schmelzleiter 11 bei einem Überstromereignis durch, so wird die Lichtbogenzone durch die Kraft des Federelements 15 auseinandergezogen oder, je nach Ausgestaltung, gedrückt.

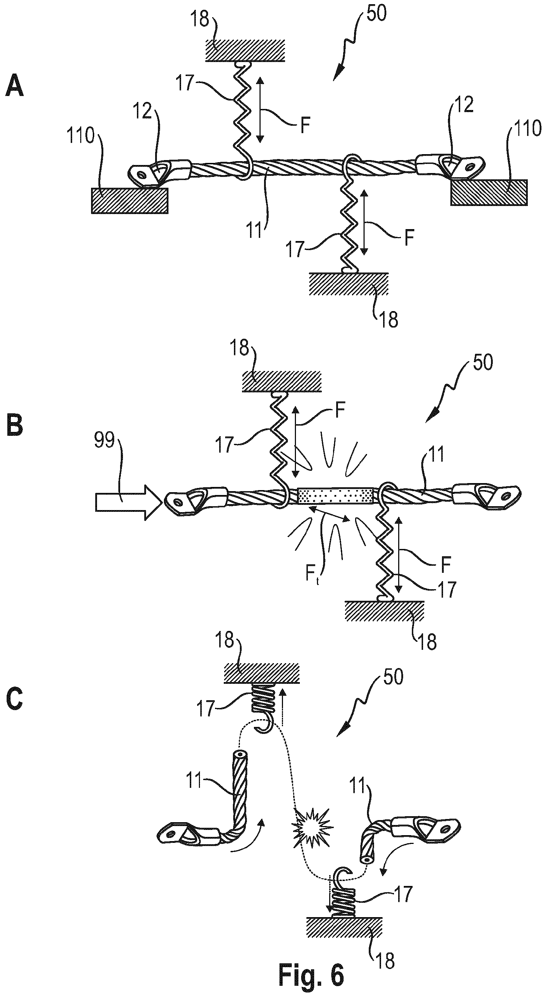

**Fig. 6** illustriert eine weitere, besonders bevorzugte Ausgestaltung einer Schmelzsicherung 50. Auch hier bildet eine Drahtlitze den Schmelzleiter 11. An beiden Enden des Schmelzleiters 11 sind Kabelschuhe 12 zur elektrischen und mechanischen Anbindung der Schmelzsicherung 50 an den entsprechenden Montagepunkten 110 des Batteriemoduls vorgesehen. In dieser Ausgestaltung wirken zwei Spiralfedern 17 aus unterschiedlichen Richtungen in senkrechter Richtung auf den Schmelzleiter 11. Die Spiralfedern 17 sind an sich gegenüberliegenden Strukturen 18 des Batteriemoduls, insbesondere des Batteriegehäuses, befestigt, so dass die Federkräfte im eingebauten Zustand der Schmelzsicherung 50 in unterschiedlichen Richtungen auf den Schmelzleiter 11 wirken (Teilfigur 6A).

Teilfigur 6B illustriert das Auftreten eines Überstroms 99, der zur Auslösung der Schmelzsicherung 50 führt. Der Schmelzleiter 11 schmilzt durch und die beiden Spiralfedern 17 ziehen die Enden des aufgeschmolzenen Schmelzleiters 11 entsprechend der wirkenden Federkräfte in entgegengesetzte Richtungen, so dass die Enden der Drahtlitze bzw. des Schmelzleiters 11 sehr rasch aus der Schmelzzone gezogen werden. Ein gegebenenfalls entstandener Lichtbogen wird auf diese Weise besonders schnell gelöscht (Teilfigur 6C).

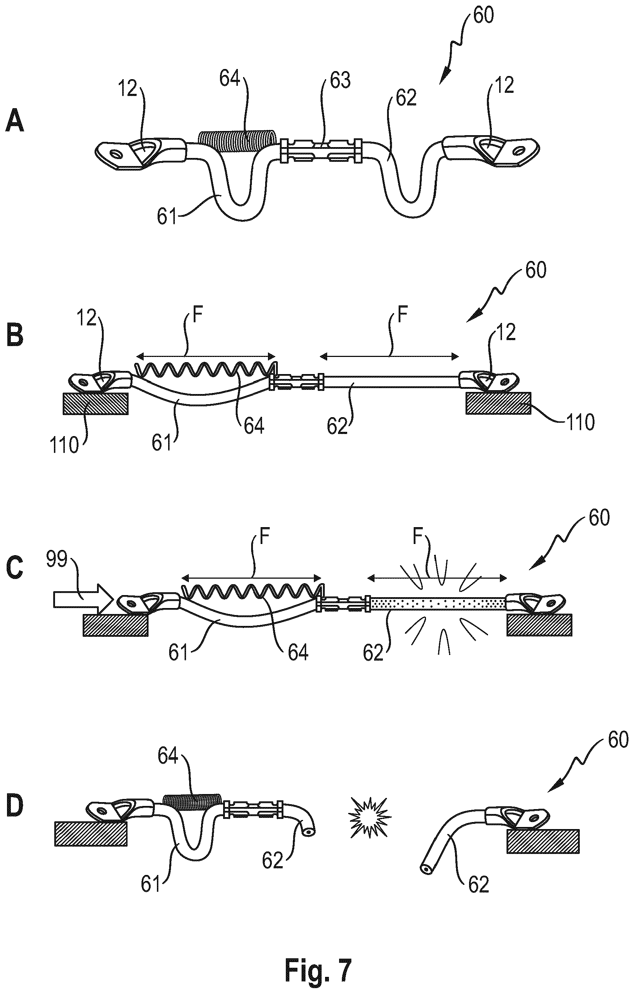

**Fig.** 7 illustriert eine bevorzugte Ausgestaltung einer Schmelzsicherung in einer anderen grundsätzlichen Ausführungsform der Schmelzsicherung 60, bei der zusätzlich zu einem Schmelzleiter 62 ein flexibler Leitungsabschnitt 61 vorgesehen ist, der von einer Drahtlitze gebildet wird. Der flexible Leitungsabschnitt 61 ist beispielsweise als Kupferlitze bzw. als Litze aus einer Vielzahl von Kupferdrähten ausgebildet. Diese Kupferlitze 61 bildet in erster Linie das flexible Element der Schmelzsicherung 60, so dass durch die mechanische Flexibilität der Schmelzsicherung 60 mechanische Toleranzen des Batteriemoduls ausgeglichen werden können und gleichzeitig eine Nachgiebigkeit bei Längen- oder Volumenänderungen, die thermisch und/oder mechanisch verursacht sein können, gewährleistet ist, ohne dass es zu einer Beschädigung der Schmelzsicherung 60 kommt.

Zusätzlich zu der Drahtlitze bzw. der Kupferlitze 61 (flexibler Leitungsabschnitt) ist ein Schmelzleiter 62 vorgesehen. Hierbei kann es sich in bevorzugter Weise ebenfalls um eine Drahtlitze handeln, die aus Schmelzleiterdrähten hergestellt ist. In anderen Ausgestaltungen kann der Schmelzleiter 62 aber beispielsweise auch ein starrer Schmelzleiter, wie beispielsweise ein Kupferstanzteil, sein.

Die flexible Kupferlitze 61 und der Schmelzleiter 62 sind mit einem Verbindungselement 63, beispielsweise einem üblichen Stoßverbinder oder in anderen Ausgestaltungen durch Schweißung miteinander gewissermaßen in Reihe geschaltet. Die Kupferlitze 61 ist stromtragfähiger als der Schmelzleiter 62, so dass im Fall eines Überstroms in erster Linie der Schmelzleiter 62 schmilzt.

An dem freien Ende der Kupferlitze 61 und dem freien Ende des Schmelzleiters 62 sind Kabelschuhe 12 vorgesehen, mit denen die Schmelzsicherung 60 in einem Batteriemodul montiert werden kann. In der hier gezeigten Ausgestaltung wird der Abschnitt mit der flexiblen Kupferlitze 61 von einer Spiralfeder 64 überspannt. Diese Spiralfeder 64 verläuft im gespannten Zustand also parallel zur Kupferlitze 61.

Teilfigur 7A zeigt den nicht montierten Zustand der Schmelzsicherung 60, bei dem die Spiralfeder 64 (Zugfeder) in entspannter Form vorliegt. Teilfigur 7B zeigt die Schmelzsicherung 60 im montierten Zustand, wobei die beiden Kabelschuhe 12 an feste Montagepunkte 110 innerhalb des Batteriemoduls mechanisch und elektrisch angeschlossen sind. Die Montage erfolgt derart, dass die Schmelzsicherung 60 gespannt wird. Hierbei spannt sich insbesondere die Spiralfeder 64, so dass der flexible Leitungsabschnitt, der von der Kupferlitze 61 gebildet wird, unter Spannung steht.

In der hier illustrierten Ausgestaltung ist auch der Schmelzleiter 62 als flexibler Leiter ausgebildet, insbesondere als Drahtlitze aus dünnen Schmelzleiterdrähten. Durch die gespannte Montage der Schmelzsicherung 60 streckt sich daher in dieser Ausgestaltung auch der Schmelzleiter 62. Die in dieser Ausgestaltung vorgesehene Flexibilität des Schmelzleiters 62 durch Verwendung einer Drahtlitze als Schmelzleiter ist nicht zwingend erforderlich. Eine flexible Ausgestaltung sowohl der Zuleitung bzw. der Kupferlitze 61 und des Schmelzleiters 62 ist jedoch besonders vorteilhaft, da hierdurch die mechanische Flexibilität der Schmelzsicherung 60 weiter erhöht wird.

Teilfigur 7C illustriert das Auftreten eines Überstroms 99, der zur Auslösung der Schmelzsicherung 60 führt. Durch den Überstrom 99 erhitzt sich der Schmelzleiter 62 derart, dass es zu einem Durchschmelzen des Schmelzleiters 62 kommt. Die die Stromzuleitung bildende Kupferlitze 61 bleibt aufgrund ihrer Dimensionierung intakt. Nach der Auftrennung bzw. dem Aufschmelzen des Schmelzleiters 62 kontrahiert die Spiralfeder 64, die oberhalb der flexiblen Drahtlitze bzw. der Kupferlitze 61 liegt, und zieht die getrennten Enden des Schmelzleiters 62 sehr schnell auseinander, so dass ein gegebenenfalls entstandener Lichtbogen sehr schnell gelöscht wird.

In den verschiedenen hier illustrieren Ausgestaltungen der Schmelzsicherung kann der Schmelzleiter 11, 62 und gegebenenfalls die flexible Zuleitung bzw. die Kupferlitze 61 zusätzlich mit Keramikperlen isoliert sein. Diese zusätzliche Isolierung eignet sich insbesondere für die in den Fig. 5, 6 und 7 gezeigten Ausgestaltungen.

Die beschriebenen Schmelzsicherungen können insbesondere bei Batteriemodulen eingesetzt werden, um eine Brandgefahr, die insbesondere durch extern verursachte Kurzschlüsse, beispielsweise bei der Montage, verursacht wird, zu verhindern. Die beschriebenen Schmelzsicherungen führen zu einem sehr schnellen Abschalten des Batteriemoduls. Die Schmelzsicherungen dienen dabei vor allem für eine Hochstromsicherung, wobei der Nennwert zum Auslösen der Schmelzsicherung vorteilhafterweise in einem Bereich zwischen 300 bis 500 Ampere liegt, beispielsweise bei 300 Ampere.

## Patentansprüche

1. Batteriemodul (100) umfassend ein Gehäuse (101), mindestens ein Anschlusselement (107), insbesondere ein Anschlussstecker, und innerhalb des Gehäuses eine Mehrzahl von elektrochemischen Energiespeicherzellen (102), wobei das Batteriemodul mindestens eine Schmelzsicherung (10; 20; 30; 40; 50; 60) mit einem Schmelzleiter (11; 62) umfasst, **gekennzeichnet durch** das folgende Merkmal:
a. Die Schmelzsicherung (10; 20; 30; 40; 50; 60) umfasst eine Drahtlitze (11; 61), die aus einer Mehrzahl von Einzeldrähten aufgebaut ist, sowie zwei Anschlüsse (12) zur Anbindung an Montagepunkte (110) im Batteriemodul (100).

2. Batteriemodul nach Anspruch 1 mit dem folgenden zusätzlichen Merkmal:
a. Die Schmelzsicherung (10; 20; 30; 40; 50; 60) ist für einen Nennstrom in einem Bereich zwischen 10 und 1000 Ampere, vorzugsweise zwischen 200 und 500 Ampere, ausgelegt.

3. Batteriemodul nach Anspruch 1 oder Anspruch 2 mit dem folgenden zusätzlichen Merkmal:
a. Die Schmelzsicherung (10; 20; 30; 40; 50; 60) umfasst als Anschlüsse (12) zur Anbindung an die Montagepunkte (110) in dem Batteriemodul (100) Kabelschuhe und/oder Steckverbinder und/oder Aderendhülsen.

4. Batteriemodul nach einem der vorhergehenden Ansprüche mit dem folgenden zusätzlichen Merkmal:
a. Die Drahtlitze (11) ist der Schmelzleiter (11).

5. Batteriemodul nach Anspruch 4 mit dem folgenden zusätzlichen Merkmal:
a. Einzeldrähte der Drahtlitze (11) sind aus einem metallischen Werkstoff gebildet;
b. der metallische Werkstoff umfasst Silber und/oder Zinn und/oder Kupfer.

6. Batteriemodul nach Anspruch 4 oder Anspruch 5 mit dem folgenden zusätzlichen Merkmal:
a. Der Schmelzleiter (11) weist eine Länge von mindestens 2 cm auf.

7. Batteriemodul nach einem der Ansprüche 4 bis 6 mit mindestens einem der folgenden zusätzlichen Merkmale:
a. Die Drahtlitze (11) ist von einem elektrischen Isolierungsmaterial umgeben, das mechanisch flexibel ist;
b. das elektrische Isolierungsmaterial ist von einem keramischen Material, insbesondere von Keramikperlen (13), gebildet.

8. Batteriemodul nach einem der Ansprüche 4 bis 7 mit mindestens einem der folgenden zusätzlichen Merkmale:
a. Das Batteriemodul oder die Schmelzsicherung (30; 40; 50) umfasst mindestens ein Mittel (14; 15; 17) zum Auseinanderziehen von Teilen der Drahtlitze (11) nach deren Durchschmelzen;
b. das wenigstens eine Mittel (14; 15; 17) zum Auseinanderziehen von Teilen der Drahtlitze (11) ist mindestens ein Federelement;
c. das mindestens eine Federelement ist mindestens eine Spiralfeder.

9. Batteriemodul nach Anspruch 8 mit mindestens einem der folgenden zusätzlichen Merkmale:
a. Das mindestens eine Mittel (14) zum Auseinanderziehen von Teilen der Drahtlitze (11) wirkt in Längsrichtung der Drahtlitze;
b. das Mittel (14) zum Auseinanderziehen von Teilen der Drahtlitze (11) ist eine Spiralfeder, die sich in Längsrichtung der Drahtlitze erstreckt und die an mindestens einem Punkt mechanisch mit der Drahtlitze verbunden ist.

10. Batteriemodul nach Anspruch 8 mit mindestens einem der folgenden zusätzlichen Merkmale:
a. Das mindestens eine Mittel (15; 17) zum Auseinanderziehen von Teilen der Drahtlitze (11) wirkt senkrecht in Bezug zur Längserstreckung der Drahtlitze;
b. das mindestens eine Mittel (15; 17) zum Auseinanderziehen von Teilen der Drahtlitze (11) ist mindestens ein Federelement, vorzugsweise sind es zwei Federelemente;
c. das mindestens eine Mittel (17) zum Auseinanderziehen von Teilen der Drahtlitze wird von zwei Federelementen realisiert, die an verschiedenen Abschnitten der Drahtlitze (11) angreifen.

11. Batteriemodul nach einem der Ansprüche 1 bis 3 mit mindestens einem der folgenden zusätzlichen Merkmale:
a. Die Schmelzsicherung (60) umfasst zusätzlich zu dem Schmelzleiter (62) einen mechanisch flexiblen elektrischen Leitungsabschnitt (61), der von der Drahtlitze (61) gebildet wird;
b. der mechanisch flexible Leitungsabschnitt (61), der von der Drahtlitze gebildet wird, steht im montierten Zustand unter Vorspannung, insbesondere unter Federspannung;
c. die Vorspannung, insbesondere die Federspannung, wirkt in Längsrichtung des mechanisch flexiblen elektrischen Leitungsabschnitt (61) und bewirkt eine Kontraktion des mechanisch flexiblen elektrischen Leitungsabschnitts (61) bei einem Durchschmelzen des Schmelzleiters (62).

## Claims

1. Battery module (100) comprising a housing (101), at least one connection element (107), in particular a connection plug, and a plurality of electrochemical energy storage cells (102) within the housing, wherein the battery module comprises at least one fuse (10; 20; 30; 40; 50; 60) which has a fusible conductor (11; 62), **characterized by** the following feature:
**a.** the fuse (10; 20; 30; 40; 50; 60) comprises a wire strand (11; 61), which is formed from a plurality of individual wires, and two connections (12) for attachment to mounting points (110) in the battery module (100).

2. Battery module according to Claim 1, having the following additional feature:
a. the fuse (10; 20; 30; 40; 50; 60) is designed for a nominal current in a range between 10 and 1000 amps, preferably between 200 and 500 amps.

3. Battery module according to Claim 1 or Claim 2, having the following additional feature:
a. the fuse (10; 20; 30; 40; 50; 60) comprises cable lugs and/or plug-in connectors and/or wire end sleeves as connections (12) for attachment to the mounting points (110) in the battery module (100).

4. Battery module according to one of the preceding claims, having the following additional feature: a. the wire strand (11) is the fusible conductor (11).

5. Battery module according to Claim 4, having the following additional feature:
a. individual wires of the wire strand (11) are made of a metallic material;
b. the metallic material comprises silver and/or tin and/or copper.

6. Battery module according to Claim 4 or Claim 5, having the following additional feature: a. the fusible conductor (11) has a length of at least 2 cm.

7. Battery module according to one of Claims 4 to 6, having at least one of the following additional features:
a. the wire strand (11) is surrounded by an electrically insulating material, which is mechanically flexible;
b. the electrically insulating material is formed by a ceramic material, in particular by ceramic beads (13).

8. Battery module according to one of Claims 4 to 7, having at least one of the following additional features:
a. the battery module or the fuse (30; 40; 50) comprises at least one means (14; 15; 17) for pulling apart parts of the wire strand (11) after they have melted through;
b. the at least one means (14; 15; 17) for pulling apart parts of the wire strand (11) is at least one spring element;
c. the at least one spring element is at least one helical spring.

9. Battery module according to Claim 8, having at least one of the following additional features:
a. the at least one means (14) for pulling apart parts of the wire strand (11) acts in the longitudinal direction of the wire strand;
b. the means (14) for pulling apart parts of the wire strand (11) is a helical spring which extends in the longitudinal direction of the wire strand and is mechanically connected to the wire strand at least at one point.

10. Battery module according to Claim 8, having at least one of the following additional features:
a. the at least one means (15; 17) for pulling apart parts of the wire strand (11) acts perpendicularly in relation to the longitudinal extent of the wire strand;
b. the at least one means (15; 17) for pulling apart parts of the wire strand (11) is at least one spring element, preferably two spring elements;
c. the at least one means (17) for pulling apart parts of the wire strand is realized by two spring elements, which act on different portions of the wire strand (11).

11. Battery module according to one of Claims 1 to 3, having at least one of the following additional features:
a. the fuse (60) comprises, in addition to the fusible conductor (62), a mechanically flexible electrical line portion (61), which is formed by the wire strand (61);
b. the mechanically flexible line portion (61) which is formed by the wire strand is under bias, in particular under spring tension, in the mounted state;
c. the bias, in particular the spring tension, acts in the longitudinal direction of the mechanically flexible electrical line portion (61) and causes the mechanically flexible electrical line portion (61) to contract when the fusible conductor (62) melts through.

## Revendications

1. Module de batterie (100) comprenant un boîtier (101), au moins un élément de connexion (107), en particulier une fiche de connexion, et, à l'intérieur du boîtier, une pluralité de cellules de stockage d'énergie électrochimique (102), le module de batterie comprenant au moins un fusible (10 ; 20 ; 30 ; 40 ; 50 ; 60) avec un conducteur fusible (11 ; 62), **caractérisé par** la caractéristique suivante :
a. le fusible (10 ; 20 ; 30 ; 40 ; 50 ; 60) comprend un toron de fils (11 ; 61) qui est constitué d'une pluralité de fils individuels, ainsi que deux raccords (12) pour le raccordement à des points de montage (110) dans le module de batterie (100).

2. Module de batterie selon la revendication 1 avec la caractéristique supplémentaire suivante :
a. le fusible (10 ; 20 ; 30 ; 40 ; 50 ; 60) est conçu pour un courant nominal compris entre 10 et 1000 ampères, de préférence entre 200 et 500 ampères.

3. Module de batterie selon la revendication 1 ou la revendication 2 avec la caractéristique supplémentaire suivante :
a. le fusible (10 ; 20 ; 30 ; 40 ; 50 ; 60) comprend, en tant que connexions (12) pour le raccordement aux points de montage (110) dans le module de batterie (100), des cosses et/ou des connecteurs et/ou des embouts.

4. Module de batterie selon l'une des revendications précédentes avec la caractéristique supplémentaire suivante :
a. le toron de fils (11) est le conducteur fusible (11).

5. Module de batterie selon la revendication 4 avec la caractéristique supplémentaire suivante :
a. les fils individuels du toron de fils (11) sont formés d'un matériau métallique ;
b. le matériau métallique comprend de l'argent et/ou de l'étain et/ou du cuivre.

6. Module de batterie selon la revendication 4 ou la revendication 5 avec la caractéristique supplémentaire suivante :
a. le conducteur fusible (11) présente une longueur d'au moins 2cm.

7. Module de batterie selon l'une des revendications 4 à 6 avec au moins une des caractéristiques supplémentaires suivantes :
a. le fil conducteur (11) est entouré d'un matériau d'isolation électrique qui est mécaniquement flexible ;
b. le matériau d'isolation électrique est formé d'un matériau céramique, notamment de billes de céramique (13).

8. Module de batterie selon l'une des revendications 4 à 7 avec au moins une des caractéristiques supplémentaires suivantes :
a. le module de batterie ou le fusible (30 ; 40 ; 50) comprend au moins un moyen (14 ; 15 ; 17) pour écarter des parties du toron de fils (11) après sa fusion ;
b. ledit au moins un moyen (14 ; 15 ; 17) pour écarter des parties du toron de fils (11) est au moins un élément à ressort ;
c. ledit au moins un élément à ressort est au moins un ressort spiral.

9. Module de batterie selon la revendication 8 avec au moins une des caractéristiques supplémentaires suivantes :
a. ledit au moins un moyen (14) pour écarter des parties du toron de fils (11) agit dans la direction longitudinale du toron de fils ;
b. le moyen (14) pour écarter des parties du toron de fils (11) est un ressort spiral qui s'étend dans la direction longitudinale du toron de fils et qui est relié mécaniquement au toron de fils en au moins un point.

10. Module de batterie selon la revendication 8 avec au moins une des caractéristiques supplémentaires suivantes :
a. ledit au moins un moyen (15 ; 17) d'écartement de parties du toron de fils (11) agit perpendiculairement par rapport à l'extension longitudinale du toron de fils ;
b. ledit au moins un moyen (15 ; 17) pour écarter des parties du toron de fils (11) est au moins un élément de ressort, de préférence deux éléments de ressort ;
c. ledit au moins un moyen (17) pour écarter des parties du toron de fils est réalisé par deux éléments élastiques qui s'engagent sur des portions différentes du toron de fils (11).

11. Module de batterie selon l'une des revendications 1 à 3 avec au moins une des caractéristiques supplémentaires suivantes :
a. le fusible (60) comprend, en plus du conducteur fusible (62), une section de ligne électrique (61) mécaniquement flexible formée par le toron de fils (61) ;
b. la section de ligne mécaniquement flexible (61), qui est formée par le toron de fils, est soumise à une précontrainte, en particulier à une tension de ressort, à l'état monté ;
c. la précontrainte, en particulier la tension du ressort, agit dans le sens longitudinal de la section de ligne électrique (61) mécaniquement flexible et provoque une contraction de la section de ligne électrique (61) mécaniquement flexible lors d'une fusion du conducteur fusible (62).
